# EUROPEAN PATENT APPLICATION

(11) **EP 4 579 686 A1**
(43) Date of publication of application: **02.07.2025**
(21) Application number: 23307430.1
(22) Date of filing: 29.12.2023
(51) Int. Cl.: G21C 3/32, G21C 3/322, G21C 3/33

(54) **DEBRIS FILTERING GRID FOR A NUCLEAR FUEL ASSEMBLY BOTTOM NOZZLE**

(71) Applicant: FRAMATOME, 92400 Courbevoie (FR)
(72) Inventor: BEN AISSA, Mhamed, 69100 Villeurbanne (FR); MESSINGSCHLAGER, Marco, 91346 Wiesenttal (DE); BLANC, Pascal Didier, 64295 Darmstadt (DE); RIEDER, Elmar, 91052 Erlangen (DE); SOHN, Kevin, 63739 Aschaffenburg (DE); REHM, Markus, 90427 Nüremberg (DE)
(74) Representative: Lavoix

(57) **Abstract**

The debris filtering grid is configured to be positioned upstream or downstream a tie plate (16) of a bottom nozzle of a nuclear fuel assembly, the tie plate (16) having structural members (20) and flow passages (22) delimited between the structural members (20), wherein the debris filtering grid comprises flow channels (36) for a coolant fluid to flow through the debris filtering grid and ligaments (40) extending across the flow channels (36) for filtering debris, at least a part of the ligaments (40) being streamlined such as to exhibit a streamlined profile and straighten the fluid flow downstream and/or upstream the debris filtering grid.

## Description

The invention relates to a debris filtering grid for a bottom nozzle of a nuclear fuel assembly.

Some nuclear fuel assemblies (or "fuel assemblies") comprise nuclear fuel rods (or "fuel rods") arranged in a bundle and a skeleton supporting the fuel rods.

Each fuel rod comprises a tubular cladding containing nuclear fuel (e.g. UO₂ pellets), the two ends of the tubular cladding being closed by respective end plugs. Generally, a fuel rod spring is inserted in the fuel rod cladding and applies a compression force on the nuclear fuel to avoid movement of the nuclear fuel inside the fuel rod.

The skeleton comprises, for example, a bottom nozzle and a top nozzle spaced along a longitudinal axis, guide thimbles (or "guide tubes") extending along the longitudinal axis between the bottom nozzle and the top nozzle connecting the bottom nozzle and the top nozzle together, and spacer grids attached to the guide thimbles all along. The fuel rods extend between the bottom nozzle and the top nozzle passing through the spacer grids. The spacer grids support the fuel rods longitudinally and transversely.

In use, fuel assemblies are arranged side-by-side inside the vessel of the nuclear reactor, the longitudinal axis of each fuel assembly extending vertically, and a coolant fluid is circulated vertically upwards in the vessel, through the fuel assemblies. The coolant fluid moderates the nuclear reaction and collects heat from the fuel rods of the fuel assemblies. In each fuel assembly, the coolant fluid enters via the bottom nozzle, circulates along the fuel rods and exits via the top nozzle.

In view of ensuring an appropriate heat exchange and of preserving the mechanical integrity of the fuel assembly (e.g. by limiting the risk of fretting) along with limiting pressure losses, it is necessary to control the flow of the coolant fluid in the fuel assembly.

One of the aims of the invention is to ensure efficient filtering of debris and an improved coolant flow in the fuel assembly with reduced pressure losses.

To this end, the invention proposes a debris filtering grid configured to be positioned upstream or downstream a tie plate of a bottom nozzle of a nuclear fuel assembly, the tie plate having structural members and flow passages delimited between the structural members, wherein the debris filtering grid comprises flow channels for a coolant fluid to flow through the debris filtering grid and ligaments extending across the flow channels for filtering debris, at least a part of the ligaments being streamlined such as to exhibit a streamlined profile and straighten the fluid flow downstream and/or upstream the debris filtering grid.

The debris filtering grid positioned on top or below the tie plate of the bottom nozzle, i.e. downstream or upstream the tie plate of the bottom nozzle, provides enhanced debris filtering capabilities.

The streamlined ligaments located in the flow channels of the debris filtering grid allow to control the fluid flow downstream and/or upstream the debris filtering grid and in the flow passages of the tie plate of the bottom nozzle.

The streamlined ligaments reduce downstream turbulences (and hence a pressure loss coefficient) with an upstream flow straightening effect (and also a pressure loss coefficient effect).

In some examples, the debris filtering grid comprises one or several of the following optional features, taken individually or in any technically feasible combination:
- each streamlined ligament exhibits an airfoil profile;
- each streamlined ligament exhibits a NACA profile;
- at least a part of the streamlined ligaments exhibit an airfoil profile with no camber and/or with a straight midline;
- at least a part of the streamlined ligaments exhibit an airfoil profile defined by an angular sector of a circle at a leading edge of the streamlined ligament;
- the debris filter grid comprises cross-members, the flow channels being delimited between the cross-members;
- at least a part of the cross-members is configured with a width increasing or decreasing progressively from an inlet face towards an outlet face of the debris filter grid;
- each cross-member is configured to guide a fluid flowing through the debris filter grid away from said corresponding structural member and towards a flow passage;
- each cross-member is configured to seat in register with a structural member of the tie plate;
- the debris filtering grid comprises a set of ligaments extending parallel to each other across each flow channel;
- the debris filtering grid comprises ligaments extending along concentric circles and/or concentric regular polygons;
- the debris filtering grid comprises cross-members extending radially from a center with defining flow channels between them, the flow channels being delimited between two radially extending cross-members, the flow channels being provided with a set of ligaments extending between the two cross-members, the ligaments being rectilinear, in particular with extending along segments of concentric polygons centered on the center, and/or non-rectilinear, for example curvilinear, in particular with extending along arcs of concentric circles centered on the center.

The invention also relates to a bottom nozzle of a nuclear fuel assembly, the bottom nozzle comprising a tie plate having structural members and flow passages delimited between the structural members and a debris filtering grid arranged upstream or downstream the tie plate, the debris filtering grid being as defined above.

The invention also relates to a nuclear fuel assembly comprising a bottom nozzle and a top nozzle spaced along a longitudinal axis, fuel rods extending longitudinally between the bottom nozzle and the top nozzle, the bottom nozzle being as defined above.

In some embodiments, the nuclear fuel assembly comprises guide thimbles extending from the bottom nozzle to the top nozzle with being attached thereto, the guide thimbles being attached to the tie plate of the bottom nozzle.

The nuclear fuel assembly is for example configured for use in a PWR or a BWR or a VVER or a HTR or a RNR or a SMR.

The invention and its advantages will be better understood upon reading the following description that is given solely by way of non-limiting example and made with reference to the appended drawings, in which:
- Figure 1 is a side elevation view of a nuclear fuel assembly;
- Figure 2 is a partial sectional view of a bottom nozzle of the nuclear fuel assembly;
- Figure 3 is a partial top view of a debris filtering grid;
- Figure 4 is a partial top view of another debris filtering grid;
- Figure 5 is a partial sectional view of another debris filtering grid;
- Figure 6 is a partial sectional view of another debris filtering grid; and
- Figure 7 is a side elevation view of another nuclear fuel assembly.

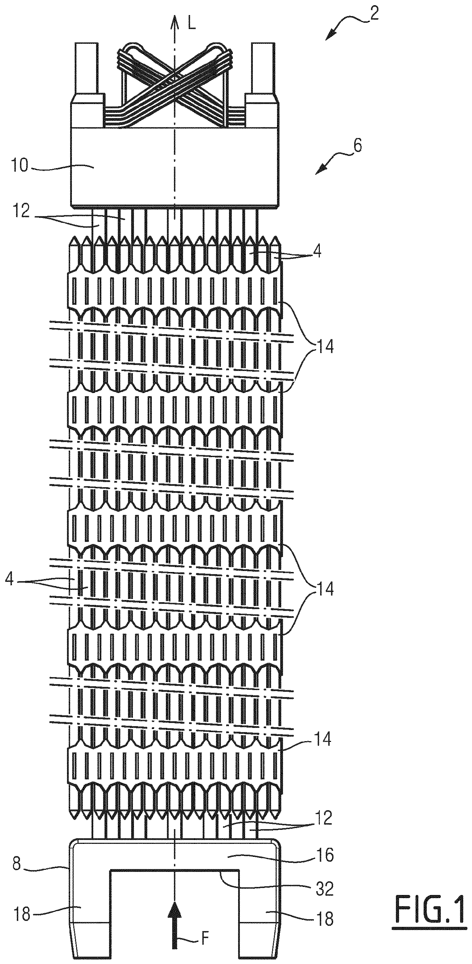

The nuclear fuel assembly 2 of Figure 1 comprises a bundle of nuclear fuel rods 4 (or fuel rods 4") and a skeleton 6 configured for supporting the fuel rods 4.

The fuel rods 4 extend parallel to each other and parallel to an assembly axis L.

The longitudinal axis L extends vertically when the nuclear fuel assembly 2 is positioned in a nuclear reactor. In operation, a coolant fluid flows through the nuclear fuel assembly 2 in a main flow direction orientated vertically upwards as illustrated by arrow F on Figure 1.

In the following, the terms "vertical", "horizontal", "bottom", "top", "longitudinal", "transversal", "upper" and "lower" refer to the position of the nuclear fuel assembly 4 in use in a nuclear reactor, the longitudinal axis being L vertical.

The skeleton 6 comprises a bottom nozzle 8, a top nozzle 10, a plurality of guide thimbles 12 and a plurality of spacer grids 14.

The bottom nozzle 8 and the top nozzle 10 are spaced one from the other along the longitudinal axis L.

The guide thimbles 12 extend parallel to the assembly axis L and connect the bottom nozzle 8 to the top nozzle 10 with maintaining a predetermined spacing along assembly axis L between the bottom nozzle 8 and the top nozzle 10. The fuel rods 4 are received between the bottom nozzle 8 and the top nozzle 10.

The spacer grids 14 are distributed along the bundle of fuel rods 4. Each spacer grid 14 is fixedly attached to the guide thimbles 12 which extend through the spacer grid 14.

Each spacer grid 14 is configured for supporting the fuel rods 4 along the assembly axis L and transversely to the assembly axis L. The spacer grids 14 are configured for supporting the fuel rods 4 in a transversely spaced relationship. The spacer grids 14 are preferably configured for maintaining the fuel rods 4 transversely at the node of a regular imaginary network.

The bottom nozzle 8 comprises a tie plate 16. The tie plate 16 extends perpendicular to the longitudinal axis L, i.e. horizontally in use. The bottom nozzle 8 comprises for example feet 18 extending downwardly from corners of the tie plate 16 for resting on a bottom plate of the nuclear reactor.

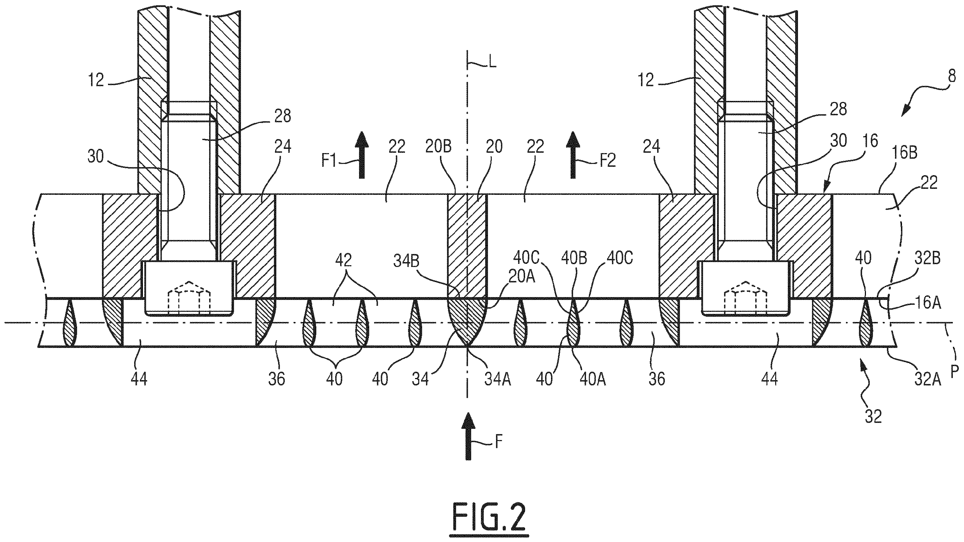

As illustrated on Figure 2, the tie plate 16 has a lower face 16A and an upper face 16B.

The tie plate 16 comprises structural members 20 defining flow passages 22 between them. The structural members 20 define the structure of the tie plate 16. The flow passages 22 allow the flow of the coolant fluid through the tie plate. Each flow passage 22 extends through the tie plate 16, from the lower face 16A to the upper face 16B. Two flow passages 22 separated by one structural member 20 are visible on Figure 2.

Each guide thimble 12 is fastened and in particular screwed to the tie plate 16. The tie plate 16 comprises for example fastening members 24 connected to the structural members 20, each guide thimble 12 being fastened to a respective fastening member 24, more particularly screwed to said fastening member 24, via a screw 28 extending through a fastening hole 30 extending through the fastening member 24. Two fastening members 24 are visible on Figure 2.

The bottom nozzle 8 comprises a debris filtering grid 32 positioned on the tie plate 16, either below the tie plate 16 (i.e. upstream the tie plate 16 when considering the main flow direction F of the coolant fluid in use) or on top of the tie plate 16 (i.e. downstream the tie plate 16 when considering the main flow direction F of the coolant fluid in use).

As, illustrated on Figure 1 and 2, the debris filtering grid 32 is positioned below the tie plate 16.

The debris filtering grid 32 is configured retaining debris.

The debris filtering grid 32 has a retention capacity higher than that of the tie plate 16.

The debris filtering grid 32 extends parallel to an extension plane P. When the debris filtering grid 32 is positioned on the tie plate 16, the extension plane P is perpendicular to the longitudinal axis L. In use, the extension plane P is horizontal.

The debris filtering grid 32 has an inlet face 32A and an outlet face 32B. In use, the inlet face 32A faces downwardly and the outlet face 32B faces upwardly. The coolant fluid flows through the debris filtering grid 32 from the inlet face 32A towards the outlet face 32B.

Preferably, the debris filtering grid 32 is positioned on the tie plate 16 with being in contact with the lower face 16A or the upper face 16B of the tie plate 16. In particular, when the debris filtering grid 32 is positioned below the tie plate 16, the outlet face 32B of the debris filtering grid 32 is in contact with the lower face 16A. Alternatively, when the debris filtering grid 32 is positioned on top of the tie plate 16, the inlet face 32A of the debris filtering grid 32 is in contact with the upper face 16B.

The debris filtering grid 32 is preferably distinct from the tie plate 16 and assembled to the tie plate 16. The debris filtering grid 32 is manufactured separately form the tie plate 16 and mounted on the tie plate 16. The debris filtering grid 32 is advantageously removable from the tie plate 16.

The debris filtering grid 32 comprises cross-members 34 and flow channels 36 defined between the cross-members 34, the flow channels 36 being configured for the coolant fluid to flow through the debris filtering grid 32.

The cross-members 34 are preferably located in the extension of the structural members 20 of the tie plate 16 in the main flow direction F, i.e. in the direction of the longitudinal axis L of the fuel assembly 2. Each cross-members 34 is located in the extension of a respective structural member 20. Each cross-member 34 is aligned with a respective structural member 20 in the main flow direction F. The cross-members 34 are located upstream or downstream the structural members 20 depending on whether the debris filtering grid 32 is position upstream or downstream the tie plate 16.

The flow channels 36 are located in the extension of the flow passages 20 of the tie plate 16. In use, the coolant fluid flows through each flow channel 36 and the corresponding flow passage 22.

At least a part of the flow channels 36 is preferably located in the extension of a respective flow passage 22 of the tie plate 16 in the main flow direction F, i.e. in the direction of the longitudinal axis L.

At least a part of the flow channels 36 is aligned with a respective flow passage 22 in the main flow direction F.

At least a part of the flow channels 36 has for example the same contour as the corresponding flow passage 22 in view along a view axis perpendicular to the extension plane P of the debris filtering grid 32.

The debris filtering grid 32 comprises ligaments 40 extending across the flow channels 36. The ligaments 40 define between them flow interspaces 42 allowing flow of the coolant fluid through the debris filtering grid 32.

Each ligament 40 extends along an extension line E contained in the extension plane P of the debris filtering grid 32. The extension line E of each ligament 40 is for example rectilinear or non-rectilinear, in particular curvilinear.

The debris filtering grid 32 comprises for example sets of ligaments 40 extending across each flow channel 36, the ligaments 40 of each set extending parallel to each other across the flow channel 36.

At least part of the ligaments 40 are streamlined to exhibit a streamlined profile. In some examples, each ligament 40 is streamlined. In some other embodiments, only part of the ligaments 40 are streamlined.

In the following, a ligament 40 provided with a streamlined profile is referred to as a "streamlined ligament 40".

The profile of a streamlined ligament 40 is considered in the cross-section of the streamlined ligament 40 taken perpendicularly to the extension line E of the streamlined ligament 40.

Each streamlined ligament 40 has a leading edge 40A and a trailing edge 40B. The leading edge 40A is adjacent the inlet face 32A of the debris filtering grid 32 and the trailing edge 40B is adjacent the outlet face 32B of the debris filtering grid 32.

Each streamlined ligament 40 has two opposed side faces 40C. Each side face 40C extends from the leading edge 40A to the trailing edge 40B

Each streamlined ligament 40 has a cord. The cord is the imaginary straight line extending from the leading edge 40A to the trailing edge 40B.

Each streamlined ligament 40 has a midline. The midline is the imaginary line extending from the leading edge 40A to the trailing edge 40B with being located at equidistance from the two faces 40C of the streamlined ligament 40.

Each streamlined ligament 40 has a width that is the distance between the two faces 40C of the streamlined ligament 40. The width of each streamlined ligament 40 varies progressively from the leading edge 40A to the trailing edge 40B.

Each streamlined ligament 40 has a profile. The profile of the streamlined ligament 40 is the shape of a cross section of the streamlined ligament 40 taken in a plane perpendicular to the extension direction of the streamlined ligament 40.

Each streamlined ligament 40 has for example a profile that is constant along the extension line E of the streamlined ligament 40. In a variant, the profile of at least part of the streamlined ligament 40 varies along the extension line of the streamlined ligament 40

Each streamlined ligament 40 has a streamlined profile and preferably an airfoil profile.

Each streamlined ligament 40 has for example a profile that is an angular sector of a circle at the leading edge 40A of the streamlined ligament 40 and/or a pointy tip at the trailing edge 40B of the streamlined ligament 40, with the width of the streamlined ligament 40 increasing progressively and then decreasing progressively from the leading edge 40A to the trailing edge 40B of the streamlined ligament 40.

Each streamlined ligament 40 may have a camber or no camber. A streamlined ligament 40 with no camber has a midline that is straight and coincides with the cord.

The two opposed faces 40C of each streamlined ligament 40 may be symmetrical relative to a median plane passing via the leading edge 40A and the trailing edge 40B of the streamlined ligament 40 or non-symmetrical.

In some examples, the streamlined ligaments 40 include at least one streamlined ligament 40 which is streamlined in the main flow direction F, i.e. in the direction perpendicular to the extension plane P of the debris filtering grid 32 and in the direction of the longitudinal axis L when the debris filtering grid 32 is assembled to the tie plate 16.

In some examples, at least part of the streamlined ligaments 40 has a cord that extends parallel to the normal to extension plane P of the debris filtering grid 32. The cord of such a streamlined ligament 40 is parallel with the longitudinal axis L and the main flow direction F.

In some examples, at least part of the streamlined ligaments 40 has a cord that is inclined with a non-zero angle relative to the normal to the extension plane P of the debris filtering grid 32. The cord of such a streamlined ligament 40 is inclined with a non-zero angle relative to longitudinal axis L and the main flow direction F.

Preferably, at least a part of the streamlined ligaments 40 has a NACA profile, i.e. an airfoil profile as developed by the NACA (National Advisory Committee for Aeronautics).

A NACA profile is identified by a reference with four digits of the type "NACAXXXX" in which the first digit defines the maximum camber (i.e. maximum distance between midline and cord) as percentage of the length of the cord (the distance between the leading edge 40A and the trailing edge 40B), the second digit defines the distance of maximum camber to the leading edge 40A of the streamlined ligament 40 in tenths of the length of the cord, and the last two digits define the ratio of the maximum width of the profile (the maximum distance between the two side faces 40C of the streamlined ligament 40) to the length of the cord. A streamlined ligament 40 with a profile with no camber has a NACA profile of the type NACA00XX.

In some examples, each cross-member 34 of the debris filtering grid 32 is configured to guide the fluid flow upstream or downstream a corresponding structural member 20 located in register with the cross-member 34 depending on whether the debris filtering grid 32 is positioned upstream or downstream the tie plate 16.

Each cross-member 34 is profiled to define a fairing upstream or downstream the corresponding structural member 20 depending on whether the debris filtering grid 32 is positioned upstream or downstream the tie plate 16.

When the debris filtering grid 32 is positioned upstream the tie plate 16, each cross-member 34 of the debris filtering grid 32 is preferably configured to guide the fluid flow away from a corresponding structural member 20 in register with the cross-member 34 and into an adjacent flow channel 36.

Each cross-member 34 has a lower edge 34A on the inlet face 32A of the debris filtering grid 32 and an upper edge 34B of the outlet face 32B of the debris filtering grid 32.

When the debris filtering grid 32 is provided upstream the tie plate 16, each cross-member 34 exhibits for example a width that increases progressively from the lower edge 34A to the upper edge 34B.

Preferably, the width of the cross-member 34 at the upper edge 34B thereof substantially equals that of the lower edge 20A corresponding structural member 20. Hence, a lower edge 20A of the structural member 20 is not directly exposed to the cooling fluid.

When the debris filtering grid 32 is provided upstream the tie plate 16, each cross-member 34 exhibits for example a width that decreases progressively from the lower edge 34A to the upper edge 34B.

Preferably, the width of the cross-member 34 at the lower edge 34A thereof substantially equals that of the upper edge 20B of the corresponding structural member 20.

Preferably, the debris filtering grid 32 is provided with one respective opening 44 in register of each fastening member 26 of the tie plate 20 to allow insertion of the screw 28 through the hole 30 of the fastening member 26.

The debris filtering grid 32 is for example manufactured by additive manufacturing. Such manufacturing technique allows profiling the cross-members 34 and the ligaments 40 (including the streamlined ligaments 40) as desired.

In use, as illustrated on Figure 1, the nuclear fuel assembly 2 is positioned in a nuclear reactor with the longitudinal axis L being vertical and a coolant fluid flowing mainly vertically from bottom to top as illustrated by arrow F.

As illustrated on Figure 2, in some examples, the coolant fluid flow hits the inlet face of the debris filtering grid 32 and passes through the flow channels 36 of the debris filtering grid 32 and the flow passages 20 of the tie plate 16. The coolant fluid flow then flows along the nuclear fuel rods 4.

The portion the coolant fluid flow in register of the structural members 20 of the tie plate 16 is diverted smoothly by the cross-members 34 of the debris filtering grid 32 towards the flow channels 36 and the flow passages 20.

The coolant fluid flow passes through each flow channel 42 by passing between the ligaments 40 extending across said flow channel 32. The ligaments 40 thus block any debris of smaller size than the flow channel 32.

The debris filtering grid 32 may comprise flow channels 36 with various contours and arranged according to different patterns. The set of ligaments 40 extending across the flow channels 36 may be arranged according to various different arrangements.

The ligaments 40 of a set of ligaments 40 provided in a flow channel 36 extend for example parallel to each other, along respective extension lines E which are rectilinear or non-rectilinear, in particular curvilinear.

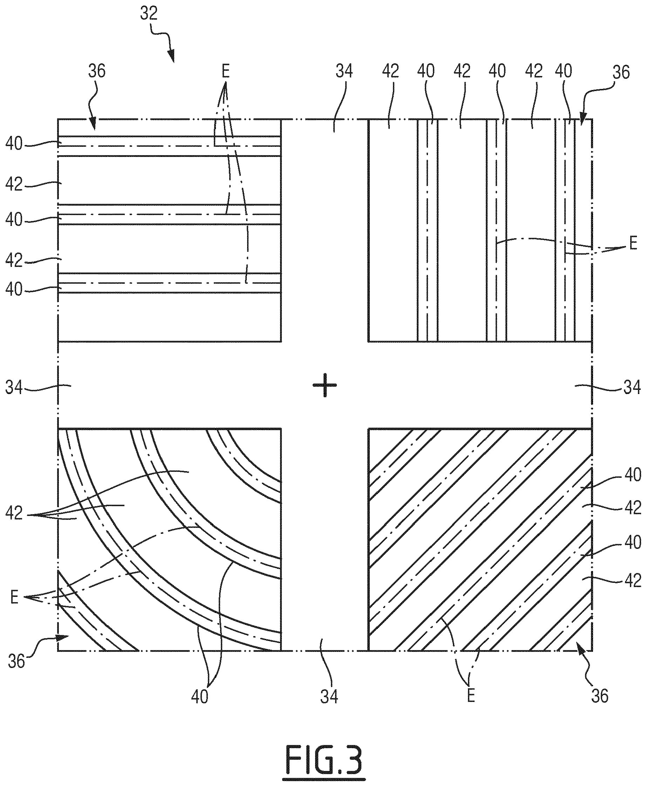

As illustrated in Figure 3, in some examples, the debris filtering grid 32 comprises at least one flow channel 36 (top left on Figure 3) provided with a set of ligaments 40 extending parallel to each other along rectilinear extension lines E and/or at least one flow channel 36 (bottom left on Figure 3) provided with a set of ligaments 40 extending parallel to each other along non-rectilinear extension lines E, in particular curvilinear extension lines E, more in particular arcuate extension lines E, even more in particular extension lines E defining portions of concentric circles.

In some examples, the debris filtering grid 32 comprise flow channels 36 provided with respective set of ligaments 40 extending parallel to extension directions different from one flow channel 36 to the other, i.e. extension directions making non-zero angles between them.

As illustrated in Figure 3, in some examples, the debris filtering grid 32 comprises at least one flow channel 36 (top left on Figure 3) provided with a set of ligaments 40 extending along rectilinear extension lines E parallel to a first extension direction and at least one other flow channel 36 (top right on Figure 3) provided with a set of ligaments 40 extending along rectilinear extension lines E parallel to a second extension direction making a non-zero angle with the first extension direction, in particular a second extension direction perpendicular with the first extension direction.

As illustrated in Figure 3, in some examples, the debris filtering grid 32 comprises at least one flow channel 36 (top left on Figure 3) provided with a set of ligaments 40 extending along rectilinear extension lines E parallel to a first extension direction and at least one flow channel 36 (bottom right on Figure 3) provided with a set of ligaments 40 extending along rectilinear extension lines E parallel to a third extension direction making a non-zero angle with the first extension direction, in particular a third extension direction oblique with the first extension direction, i.e. neither parallel nor perpendicular to the first extension direction.

As illustrated in Figure 3, in some examples, the debris filtering grid 32 comprises at least one flow channel 36 (top left on Figure 3) provided with a set of ligaments 40 extending along rectilinear extension lines E parallel to a first extension direction, at least one flow channel 36 (top right on Figure 3) provided with a set of ligaments 40 extending along rectilinear extension lines E parallel to a second extension direction and at least one flow channel 36 (bottom right on Figure 3) provided with a set of ligaments 40 extending along rectilinear extension lines E parallel to a third extension direction, the first extension direction, the second extension direction and the third extension direction being different from each other.

As illustrated on Figure 3, in some examples, the debris filtering grid 32 comprises at least one flow channel 36 (top left and/or top right and/or bottom right on Figure 3) provided with a set of ligaments 40 extending along rectilinear extension lines E and at least one flow channel 36 (bottom left of Figure 3) provided with a set of ligaments 40 extending along parallel non rectilinear extension lines E, in particular curvilinear extension lines E, more in particular parallel arcuate extension lines E, even more in particular parallel extension lines E defining portions of concentric circles.

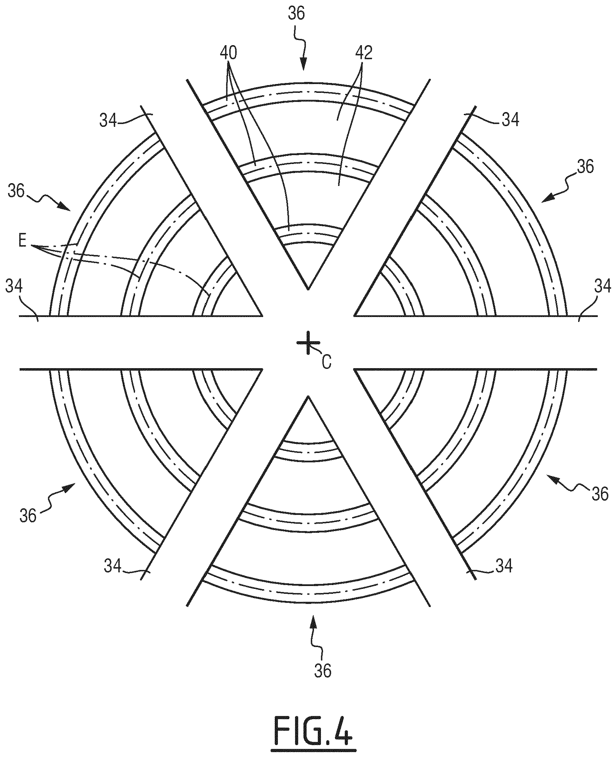

As illustrated on Figure 4, in some examples, the debris filter grid 32 comprise ligaments 40 extending along concentric circles centered on a center C and/or along regular concentric polygons centered on a center C. The center C preferably coincides with the longitudinal axis L of the nuclear fuel assembly 2. All the ligaments 40 or part of the ligaments 40 are streamlined.

As illustrated on Figure 4, in some examples, the debris filtering grid 32 comprises cross-members 34 extending radially from a center C with defining flow channels 36 between them, each flow channel 36 being delimited between two radially extending cross-members 34, each flow channel 36 being provided with a set of ligaments 40 extending between the two cross-members 34, the ligaments 40 being rectilinear, in particular with extending along segments of concentric polygons centered on the center C, or non-rectilinear, in particular curvilinear, more in particular with extending along arcs of concentric circles centered on the center C. The debris filtering grid 32 exhibits the shape of a spider web.

As illustrated on Figure 2, the streamlined ligaments 40 of the debris filtering grid 32 have the same profile with no camber and the same inclination with a cord parallel to the normal to the plan of extension P of the debris filtering grid 32, i.e. parallel to the longitudinal axis L and thus parallel to the main flow direction F. Besides, the streamlined ligaments 40 are located on a same level along the normal to the plan of extension P of the debris filtering grid 32.

In other examples, at least part of the streamlined ligaments 40 may be profiled and/or inclined differently.

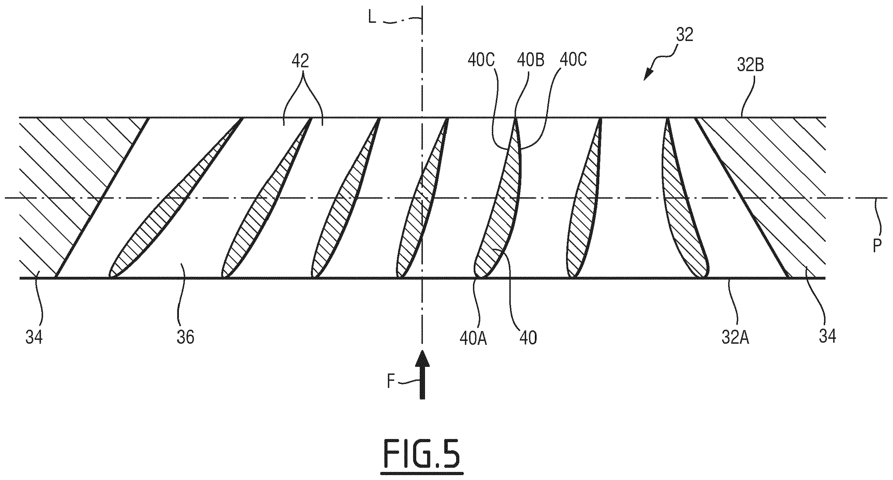

As illustrated on Figure 5, in some examples, the debris filtering grid 32 comprises streamlined ligaments 40 with different profiles, in particular profiles with different camber, and/or with different angles of inclination. The angle of inclination of a streamlined ligament 40 is the angle between the cord and the normal to the plan of extension P of the debris filter 32.

In some examples, the debris filtering grid 32 comprises streamlined ligaments 40 with different profiles and/or different angle of inclination located in distinct flow channels 36 and/or in a same flow channel 36.

As illustrated on Figure 5, in some examples, the debris filtering grid 36 comprises streamlined ligaments 40 with profiles with the same camber but with different angles of inclination and/or streamlined ligaments 40 with profiles with different cambers but with the same angle of inclination and/or streamlined ligaments 40 with profiles with different cambers and with different angles of inclination, in a same flow channel 36 and/or in different flow channels 36.

In some examples, the debris filtering grid 32 comprises streamlined ligaments 40 arranged on at least two different levels in a same flow channel 36 and/or in different flow channels 36.

Two different levels are located at different elevations along the normal to the plan of extension P of the debris filtering grid 32. One of the two different levels is closer to the inlet face 32A and the other level is closer to the outlet face 32B.

The debris filtering grid 32 comprises for examples streamlined ligaments 40 arranged on a first level, in a same flow channel 36 and/or in different flow channels 36, and streamlined ligaments 40 arranged on a second level, in a same flow channel 36 and/or in different flow channels 36.

The streamlined ligaments 40 of the first level include streamlined ligaments 40 having the same profile and/or streamlined ligaments 40 different having profiles and include streamlined ligaments 40 having the same angle of inclination and/or streamlined ligaments 40 having different angles of inclination.

The streamlined ligaments 40 of the second level include streamlined ligaments 40 having the same profile and/or streamlined ligaments 40 having different profiles and include streamlined ligaments 40 having the same angle of inclination and/or streamlined ligaments 40 having different angles of inclination.

The debris filtering grid 32 comprises for examples first streamlined ligaments 40 arranged on a first level and having a same first profile and streamlined ligaments 40 arranged on a second level and having a same second profile. The first streamlined ligaments 40 and the second streamlined ligaments 40 are locate in a same flow channel 36 or in different flow channels 36. The first streamlined ligaments 40 have the same angle of inclination or include streamlined ligaments 40 with different angles of inclination and the second streamlined ligaments 40 have the same angle of inclination or include streamlined ligaments 40 with different angles of inclination.

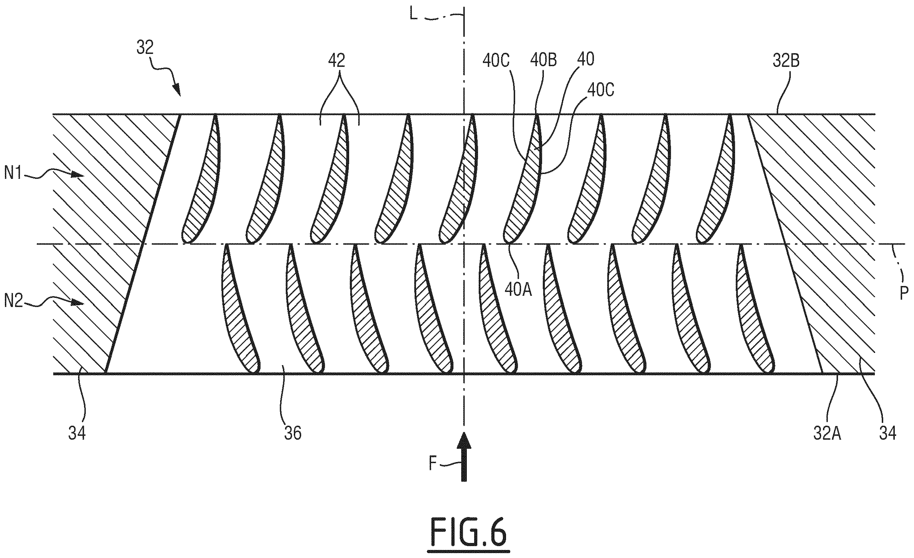

As illustrated on Figure 6, in some examples, the debris filtering grid 32 comprises first streamlined ligaments 40 arranged on a first level N1 having a same first profile and a same first angle of inclination and second streamlined ligaments 40 arranged on a second level N2 and having a same second profile and a same second angle of inclination. The first profile and the second profile are different and the first and second angles of inclination are different.

In a variant, the second profile and the first profile are identical and the first angle of inclination and the second angle of inclination are different. In another variant, the second profile and the first profile are different and the first angle of inclination and the second angle of inclination are different. In another variant, the second profile and the first profile are different and the first angle of inclination and the second angle of inclination are identical.

Each streamlined ligaments 40 may have a profile that is constant or varies along the line of extension E of the streamlined ligament 40 and an angle of inclination that is constant or varies along the line of extension E of the streamlined ligament 40.

In some examples, at least one of the streamlined ligaments 40 has a profile that is constant along the line of extension E of the streamlined ligament 40 and an angle of inclination that is constant along the line of extension E of the streamlined ligament 40.

In some examples, at least one of the streamlined ligaments 40 has a profile that varies along the line of extension E of the streamlined ligament 40 and/or an angle of inclination that varies along the line of extension E of the streamlined ligament 40.

In some examples, at least one of the streamlined ligaments 40 has a profile that varies along the line of extension E of the streamlined ligament 40 and an angle of inclination that varies along the line of extension E of the streamlined ligament 40.

In some examples, at least one of the streamlined ligaments 40 has a profile that is constant along the line of extension E of the streamlined ligament 40 and an angle of inclination that varies along the line of extension E of the streamlined ligament 40.

In some examples, at least one of the streamlined ligaments 40 has a profile that varies along the line of extension E of the streamlined ligament 40 and an angle of inclination that is constant along the line of extension E of the streamlined ligament 40.

As illustrated Figure 2, 5 and 6, in some examples, the streamlined ligaments 40 include adjacent streamlined ligaments 40 with no overlap in view along a view direction perpendicular to the plane of extension P of the debris filtering grid 32.

Other configurations are possible.

In some examples, the streamlined ligaments 40 include adjacent streamlined ligaments 40 with an overlap in view along a view direction perpendicular to the plane of extension P of the debris filtering grid 32.

Such a configuration of adjacent streamlined ligaments 40, also referred to as a "no see through" configuration, can increase the debris retention capacity of the debris filtering grid 32.

As illustrated Figure 2, 5 and 6, in some examples, the profiles of the streamlined ligaments 40 have midlines which are straight or curvilinear with no point of inflection.

Other profiles are possible.

In some examples, the streamlined ligaments 40 include at least one streamlined ligament 40 have a profile with a midline that exhibits at least one point of inflection. Such a streamlined ligament 40 exhibits a wavy profile.

One or several streamlined ligaments 40 with a wavy profile can improve the flow through the debris filtering grid.

In use, the flow of coolant enters the nuclear fuel assembly 2 via the bottom nozzle 8. The debris filtering grid 32 can catch debris present in the coolant flow.

The streamlined ligaments 40 lower the flow resistance of these streamlined ligaments 40 in comparisons to non-streamlined ligaments 40 thus limiting the pressure drop generated by bottom nozzle 8.

The debris filtering grid 32 with the streamlined ligaments 40 enhances the flow uniformity, namely with leading to a reduction of the radial velocity gradient downstream the debris filter grid 32.

From the flow conservation equations, it can be inferred that the radial velocity gradient upstream the debris filter grid 32 is also reduced, i.e. the flow is also straightened upstream of the debris filter grid 32.

The streamlined ligaments 40 thus straighten the fluid flow downstream the debris filtering grid 32 with also an effect upstream the debris filtering grid 32.

The debris filtering grid 32 with streamlined ligaments 40 allows an efficient debris filtering while limiting the pressure loss across the bottom nozzle 8.

The debris filter grid 32 can be position below the tie plate 16 or above the tie plate 16 to straighten the flow through the tie plate 16, in particular through the flow passages 22 of the tie plate 16.

The nuclear fuel assembly 2 as illustrated in Figure 1 is configured for a Pressurized Water Reactor (PWR).

The debris filtering grid 32 can be configured for use in any type of nuclear fuel assembly provided with a bottom nozzle for any type or nuclear reactor, such as a Boiling Water Reactor (BWR), a water-water energetic reactor (WWER or also VVER from russian "Vodo-Vodianoï Energuetitcheski Reaktor"), a High Temperature Reactor (HTR), a Rapid Neutron Reactor (RNR) or a Small Modular Reactor (SMR).

In some examples, the debris filtering grid 32 is configured for use in a nuclear fuel assembly for use in a VVER.

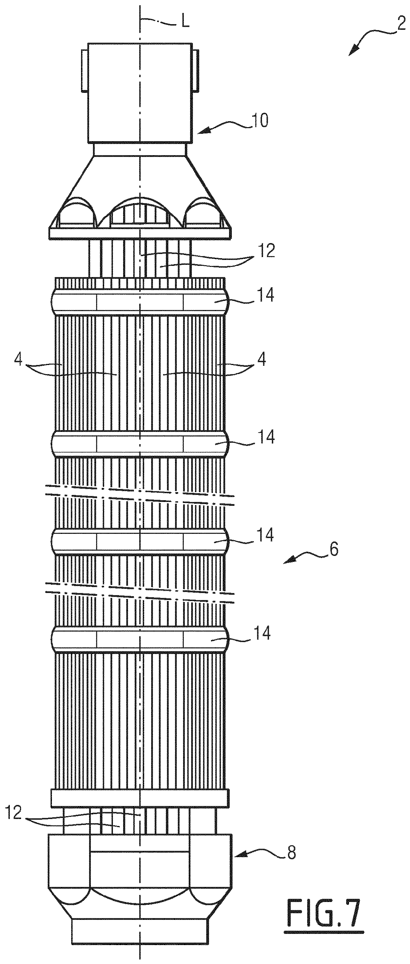

A nuclear fuel assembly 2 for a VVER is illustrated on Figure 7 on which elements similar to that of Figure 1 bear the same numeral reference.

The nuclear fuel assembly 2 comprises a bundle of nuclear fuel rods 4 and a skeleton 6 comprising a bottom nozzle 8, a top nozzle 10, a plurality of guide thimbles 12 and a plurality of spacer grids 14.

In the nuclear fuel assembly 2 of Figure 1, the fuel rods are maintained at the nodes of an imaginary rectangular network.

The nuclear fuel assembly 2 of Figure 7 differs of that of Figure 1 in that the fuel rods are maintained at the nodes of an imaginary hexagonal network.

The bottom nozzle 8 of the nuclear fuel assembly 2 of Figure 7 comprises a tie plate 16 and is provided with a debris filtering grid 32.

In some examples, the debris filtering grid 32 is configured for use in a nuclear fuel assembly for a Boiling Water Reactor (BWR).

Such a nuclear fuel assembly differs from that of Figure 1 in that the nuclear fuel assembly is deprived of guide thimbles but comprises a fuel channel encasing the bundle of fuel rods and a water channel provided inside the bundle of fuel rods. The bottom nozzle and the top nozzle of the fuel assembly are for example mechanically connected by the fuel channel and/or the water channel. Spacer grid may be provided with being attached to the channel and/or the water channel or not.

In some examples, the nuclear fuel assembly is not configured for receiving nuclear fuel rods but is configured for receiving nuclear fuel particles, such as tri-structural isotropic fuel particles (or TRISO fuel particles), or nuclear fuel plates, each nuclear fuel plate comprising tablets of fissile material received in cells of a planar honeycomb substrate sandwiched between to closure panels. The nuclear fuel particles or the nuclear fuel plates are for example encased in a tubular water channel provided with a bottom nozzle at an inlet extremity of the water channel.

All the statements made in relation to the tie plate 16 and debris filtering grid 32 of the nuclear fuel assembly 2 of Figure 1 apply to that of the other types of nuclear fuel assembly.

## Claims

1. A debris filtering grid configured to be positioned upstream or downstream a tie plate (16) of a bottom nozzle of a nuclear fuel assembly, the tie plate (16) having structural members (20) and flow passages (22) delimited between the structural members (20), wherein the debris filtering grid comprises flow channels (36) for a coolant fluid to flow through the debris filtering grid and ligaments (40) extending across the flow channels (36) for filtering debris, at least a part of the ligaments (40) being streamlined such as to exhibit a streamlined profile and straighten the fluid flow downstream and/or upstream the debris filtering grid.

2. Debris filter according to claim 1, wherein each streamlined ligament (40) exhibits an airfoil profile.

3. Debris filter according to claim 1 or 2, wherein each streamlined ligament (40) exhibits a NACA profile.

4. Debris filter according to anyone of the preceding claims, wherein at least a part of the streamlined ligaments (40) exhibit an airfoil profile with no camber and/or with a straight midline.

5. Debris filter according to anyone of the preceding claims, wherein at least a part of the streamlined ligaments (40) exhibit an airfoil profile defined by an angular sector of a circle at a leading edge of the streamlined ligament (40).

6. Debris filter according to anyone of the preceding claims, wherein the debris filter grid comprises cross-members (34), the flow channels (36) being delimited between the cross-members (34).

7. Debris filter according to anyone of the preceding claims, wherein at least a part of the cross-members (34) is configured with a width increasing or decreasing progressively from an inlet face (32A) towards an outlet face (32B) of the debris filter grid.

8. Debris filter according to anyone of the preceding claims, wherein each cross-member (34) is configured to guide a fluid flowing through the debris filter grid away from said corresponding structural member (20) and towards a flow passage (22).

9. Debris filter according to anyone of the preceding claims, wherein each cross-member (34) is configured to seat in register with a structural member (20) of the tie plate.

10. Debris filter according to anyone of the preceding claims, comprising a set of ligaments (40) extending parallel to each other across each flow channel (36).

11. Debris filter according to anyone of the preceding claims, comprising ligaments (40) extending along concentric circles and/or concentric regular polygons.

12. Debris filter according to anyone of the preceding claims, comprises cross-members (34) extending radially from a center (C) with defining flow channels (36) between them, the flow channels (36) being delimited between two radially extending cross-members (34), the flow channels (36) being provided with a set of ligaments (40) extending between the two cross-members (34), the ligaments (40) being rectilinear, in particular with extending along segments of concentric polygons centered on the center (C), and/or non-rectilinear, for example curvilinear, in particular with extending along arcs of concentric circles centered on the center (C).

13. A bottom nozzle of a nuclear fuel assembly, the bottom nozzle comprising a tie plate (16) having structural members (20) and flow passages (22) delimited between the structural members (20) and a debris filtering grid (32) arranged upstream or downstream the tie plate (16), the debris filtering grid (32) being as defined in any one of the preceding claims.

14. Nuclear fuel assembly comprising a bottom nozzle (8) and a top nozzle (10) spaced along an longitudinal axis (L), fuel rods (4) extending longitudinally between the bottom nozzle (8) and the top nozzle (10), the bottom nozzle (8) being as defined in claim 13.

15. Nuclear fuel assembly as defined in claim 14, configured for use in a PWR or a BWR or a VVER or a HTR or a RNR or a SMR.
